# EUROPEAN PATENT APPLICATION

(11) **EP 4 647 159 A1**
(43) Date of publication of application: **12.11.2025**
(21) Application number: 24020137.6
(22) Date of filing: 07.05.2024
(51) Int. Cl.: B01J 8/06, B01J 19/24, F27D 11/02

(54) **HEATING ELEMENT, FURNACE FOR PERFORMING A CHEMICAL PROCESS AND/OR HEATING A PROCESS MEDIUM USING THE HEATING ELEMENT AND A CORRESPONDING METHOD**

(71) Applicant: Selas-Linde GmbH, 82049 Pullach (DE)
(72) Inventor: Kugel, Kay-Oliver, 82049 Pullach (DE); Lemme, Volkmar, 82049 Pullach (DE); Löwe, Lennard, 82049 Pullach (DE); Mayerhofer, Mathias, 82049 Pullach (DE)
(74) Representative: Lu, Jing

(57) **Abstract**

The invention relates to an electric heating element (30, 30'), in particular for arrangement in a furnace, configured to provide radiant heat, the electric heating element (30, 30') comprising an electric resistance heating band (31, 31') having a width and a thickness, wherein the width is greater than the thickness. The electric resistance heating band (31, 31') comprises a plurality of reverse bends (31a, 31a') arranged along a first direction and a plurality of sections (31b, 31b') arranged between adjacent reverse bends (31a, 31a') and an angle between a width direction of the plurality of sections (31b, 31b') and the first direction is less than 90°. The invention further relates to a furnace (100) comprising one or more of the electric heating elements (30, 30') and a method for performing a chemical process and/or heating a process medium using the furnace (100).

## Description

The invention relates to an electric heating element, a furnace for performing a chemical process and/or heating a process medium using the heating element and a corresponding method.

### Background

In a number of processes in various industries heating is required for manufacturing of products.

For example, in the chemical industry, furnaces are used to heat one or more reactants that are passed through heated reaction tubes, in which the reactants undergo catalytic or non-catalytic reactions. The heating serves in particular to overcome the activation energy required for the chemical reaction to take place. The reaction can be endothermic or, after overcoming the activation energy, exothermic. The present invention relates in particular to strongly endothermic reactions.

Examples of such processes are steam cracking, various reforming processes, in particular steam reforming, dry reforming (carbon dioxide reforming), mixed reforming processes, processes for dehydrogenating alkanes and the like. In steam cracking, the reaction tubes are guided through the reactor or furnace in the form of coils, which have at least one reverse bend in the reactor, whereas in steam reforming, reaction tubes running through the reactor without a reverse bend are typically used.

Further applications of the present invention are furnaces for performing a reverse water gas shift (RWGS) reaction of carbon dioxide and hydrogen to form carbon monoxide and water, dehydrogenation of oxygenates such as a reaction of methanol to formaldehyde and hydrogen, cleavage of ammonia to yield gaseous nitrogen and hydrogen, dehydrogenation of so-called liquid organic hydrogen carriers (LOHC) as known to the skilled person, and reforming of methanol and glycerol (as far as not already included by the term "reforming" used above).

Further, in steel making, the fabrication of direct reduced iron requires a reducing case, containing hydrogen and/or carbon monoxide, to be heated to a predetermined temperature.

In many of these processes, fired reactor, in particular fired reactors burning fossil fuels, are used for heating.

At present, however, there is an increasing demand for production without or with reduced local carbon dioxide emissions. This demand cannot be met by processes using fired reactors burning fossil fuels. Other processes are ruled out, for example, due to high costs.

Thus, electrical heating solutions are proposed to support or replace the burners in corresponding reactors or furnaces. In addition to direct electrical heating, in which electricity is applied to the reaction tubes themselves, for example in a known star (point) circuit, and other types of heating, which are not explained in detail here, there are also concepts for so-called indirect electrical heating. Regardless of the specific type of heating and the heating concept implemented, reactors heated in this way are also referred to as "furnaces".

Such indirect electrical heating can, as explained in WO2020/002326 A1, but already known from earlier publications, among others, be carried out using electrical radiating heating elements ("radiant heaters") which are suitable for heating to the high temperatures required for the reactions mentioned. Such heating elements are arranged within the furnace in such a way that they are not in direct contact with the reaction tubes. The heat transfer takes place predominantly or exclusively in the form of radiant heat. The terms "indirect heating", "heating by means of radiant heat" and the like are therefore used synonymously below. Properties of corresponding heating elements are explained below.

In such electric heating elements, electrical conductors, through which a current flows, are used. These electric conductors transform the electric energy into heat energy which is then radiated from the electric conductors. The electric conductors can have a round cross section, i.e. be a round wire, and thus be symmetrical. Wire-type electric conductors are useful for low-energy applications in which lower temperature are required. However, in larger applications which require higher heat duty, flat, i.e. essentially rectangular, cross-sections of the electric conductors are preferred, as they provide a higher surface-to-volume ratio that is advantageous with regard to the resulting heating element temperature, thereby achieving a longer lifetime and opening up the possibility to reduce material and thereby expenditure. Such electric resistance heating bands can be supported on metallic rods that are arranged within the furnace.

In these kinds of indirectly heated furnaces, the furnace components, e.g. corresponding electric heating elements, have to reach high process temperatures, e.g. in cracking furnaces, reforming furnaces, DRI (direct reduction iron) furnaces or annealing furnaces. It is therefore desirable to improve the longevity of radiative heating elements for indirect heating furnaces.

### Disclosure of the invention

In view of this background, the present invention relates to an electric heating element, a furnace for performing a chemical process and/or heating a process medium and a corresponding method with the features of the independent patent claims. Embodiments are the subject of the dependent claims and the following description.

Conventional electric heating elements comprise an electric resistance heating element that has the shape of a wire, i.e. a round cross-section, or a band with an essentially rectangular cross-section. The electric resistance heating element further comprises a plurality of reverse bends such that the electric resistance heating element is arranged, for example, in a zig-zag pattern. A current that flows through the electric resistance heating element generates heat due to the resistance of the electric resistance heating element, which is then radiated from the electric resistance heating element and used for heating.

When an electric resistance heating band is used as the electric resistance heating element, the electric resistance heating band is arranged such that sides corresponding to the width direction of adjacent electric resistance heating band face each other.

However, in such a configuration, several problems arise. For instance, when the electric heating element is arranged on a wall of a furnace, the temperature on the side of the bands closest to the wall on which the electric heating element is arranged is higher than on a side facing towards a heat sink arranged in the interior volume of the furnace, wherein the temperature difference can reach up to 30 K.

Further, hot spots are also formed near the reverse bend, in particular on hangers on which the electric resistance heating band is arranged.

According to the Beer-Lambert law, most of the radiant heat is radiated in a direction normal to the plane from which it is radiated. As in conventional electric heating elements the electric resistance heating band is arranged in a way that the wide sides of adjacent electric resistance heating bands, i.e. the side corresponding to a width direction of the electric resistance heating band and thus to the larger surface, face each other, most of the radiated heat is not radiated towards the heat sink arranged in the interior volume of the furnace, but rather towards each other, such that a temperature in the vicinity of the electric heating elements or the electric resistance heating bands respectively is higher than the temperature in the vicinity of the heat sink, whereby the temperature difference can exceed 200°C.

In order to solve these problems, the electric resistance heating band comprises a plurality of sections arranged between the reverse bends, wherein an angle between a width direction of the plurality of sections and the first direction in which the reverse bends are arranged is less than 90°. Thereby, the adjacent sections no longer face each other, i.e. sides of the plurality of sections corresponding to width at least partially face away from one another.

In detail, an electric heating element according to the invention is in particular used for arrangement in a furnace, for example a steam cracking furnace, a furnace for heating a DRI reducing gas or an annealing furnace, and is configured to provide radiant heat. The electric heating element comprises an electric resistance heating band having a width and a thickness, wherein the width is greater than the thickness and the electric resistance heating band comprises a plurality of reverse bends arranged along a first direction and a plurality of sections arranged between adjacent reverse bends. Further, an angle between a width direction of the plurality of sections and the first direction is less than 90°. The electric resistance heating band can for example comprise three parts: the reverse bends, the plurality of sections and an intermediate section, in which the electric resistance heating band is rotated to achieve the desired angle in the plurality of sections or can be arranged in a way such that sides of the plurality of section no longer directly face each other.

As the angle is less than 90°, the side of adjacent sections of the plurality of sections corresponding to the width direction, i.e. the wide side of the electric resistance heating band, no longer fully face each other and at least partially face away from the electric heating element. Thereby, an increased amount of heat is radiated away from the electric heating element. Thus, the temperature of the electric heating element, in particular the parts (in conventional arrangements) facing each other, can be reduced, reducing material fatigue and increasing the lifetime of the electric resistance heating band and the electric heating element.

In an embodiment, the angle is equal to or less than 75° or equal to or less than 60° or equal to or less than 45° or equal to or less than 30° or equal to 0°. In particular, the angle depends on the distance between adjacent sections and should be higher the closer adjacent sections are to one another. Additionally, as smaller angles lead to a higher proportion of area of the sides corresponding the wide face of adjacent sections facing away from each other, an increasing amount of heat is radiated away from the electric heating element with a decreasing angle. In particular, an angle of around 60° achieves a good balance between distributing the radiant heat away from the electric heating element and towards a heat sink that should be heated, while simultaneously not requiring additional or very little additional material for the electric resistance heating band.

In an embodiment, the plurality of sections constitutes at least 50% or at least 60% or at least 75% or at least 85% or at least 95% of the electric resistance heating band. In particular, the plurality of sections constitutes the entirety of the electric resistance heating band except the reverse bands. Thereby, the area of the electric resistance heating band radiating heat away from the electric heating element can be maximized and the aforementioned advantages can be achieved with full effect. Further, as the areas of the electric resistance heating band facing each other are reduced, the temperature of the electric resistance heating band is reduced and the lifetime of the electric resistance heating band is increased.

In an embodiment, the electric resistance heating band is guided at the reverse bends using one or more elongated suspension elements on a surface of which the electric resistance heating band rests.

Using elongated suspension elements on which the electric heating resistance band rests is an easy and cheap way to form the reverse bends and further, simply arrangement of the electric heating element, for example, on a wall of a furnace.

In an embodiment, the one or more, in particular all, suspension elements can comprise a metallic core surrounded by a thermally and electrically insulating material in particular a ceramic material that thermally and electrically insulates the metallic core from the electric resistance heating band. Thereby, the suspension elements provide a durable hanging mechanism that simultaneously is electrically and thermally insulated from the electric resistance heating bands and thereby reducing the risk of damaging the suspension elements.

The invention further relates to a furnace or process furnace is provided for performing a chemical process, i.e. a process for carrying out a chemical reaction, and/or for heating a process medium, such as a DRI reducing gas or a medium to be annealed. The furnace comprises a number of walls, e.g. side walls, a front-end wall, a back-end wall, a top wall and a bottom wall that define or enclose the interior volume of the furnace. The furnace and the interior volume can for example have a cuboid shape. To perform the chemical process and/or heat the process medium, one or more heat sinks to be heated can be at least partially provided in an interior volume or chamber or process chamber of the furnace. The furnace further comprises the electric heating element, wherein each electric heating element comprises an electric resistance heating band having a width and a thickness, wherein the width is greater than the thickness and the electric resistance heating band comprises a plurality of reverse bends arranged along a first direction and a plurality of sections arranged between adjacent reverse bends and the one or more electric heating elements are arranged such that the plurality of sections at least partially faces towards the one or more heat sinks arranged such that the plurality of sections at least partially face towards the one or more heat sinks arranged in the interior volume. "Facing towards the one or more heat sinks arranged in the interior volume" in this context is to be understood in such a way that a significant portion of the surface of the electric resistance heating bands faces in a direction towards the one or more tubes. As the width of the electric resistance heating band is larger than the thickness, the band is arranged such that a surface corresponding to the width direction is arranged such that it at least partially faces in the direction of the one or more tubes.

Thereby, in the furnace, an increased amount of heat is radiated towards the heat sink and no longer towards adjacent sections of the electric resistance heating band, reducing the temperature in the vicinity of the electric heating element and thereby overcoming the aforementioned problems.

With regard to further features and advantages of the electric heating element and embodiments thereof, reference is expressly made to the above explanations concerning the furnace proposed according to the invention and its embodiments, since these apply to this in the same way.

In an embodiment, the one or more heat sinks are tubes or reaction tubes (in the following generally "tubes") that are at least partially arranged in the interior volume of the furnace. Thereby, a one or more reactants can be passed through the correspondingly heated tubes, where they are catalytically or non-catalytically reacted. It is also possible to pass a process medium to be heated through the correspondingly heated tubes.

The one or more tubes can be guided through the furnace in any desired manner, in particular with or without one or more reversal points or reversal bends, wherein the reversal points or reversal bends can be arranged inside or outside the interior of the furnace. For example, the one or more tubes can be arranged in a single row in a vertically arranged plane or a plane parallel to one of the side walls, respectively. A multi-row arrangement in an intermediate area between two side walls is also possible. In particular, the one or more tubes can have a (total) length of 3 to 100 m and/or a diameter of 20 to 200 mm. Furthermore, the individual tubes can be designed in sections in two or more parallel strands with reduced tube diameters. For example, the multi-strand section is arranged close to the inlet to the furnace in order to provide the longest possible tube wall surface in this area. Further downstream, this arrangement combines the initially parallel strands into a common strand, preferably with a larger tube diameter. In this example, the tube consists of the two or more parallel strands, the joint and the combined strand. Conversely, it is also possible in principle to provide a multi-strand design of the tube at the end or in a middle area, with intermediate splitting sections and possibly additional joining sections. The tubes can also be filled with a suitable catalyst material and/or an inert material, depending on the type of reaction.

Using tubes, the furnace can particularly be provided for performing a steam cracking process, various reforming processes, in particular steam reforming, dry reforming (carbon dioxide reforming), mixed reforming processes, processes for the dehydrogenation of alkanes and the like. The furnace can further be a cracking furnace, a reforming furnace, a direct reduced iron (DRI) furnace etc. In general, the furnace is suitable for all types of reactions in which a feed mixture is passed in a gaseous state through the one or more tubes heated from the outside to corresponding temperature levels and thereby converted. The furnace is also suitable for heating process media only, e.g. upstream of a reactor.

In an embodiment, the one or more heat sinks are heated to a temperature level, between 0 °C and 1,200 °C, in particular between 300 °C and 1,050 °C, in particular between 400 °C and 950 °C. The temperature level can in particular be identical or comparable to a fired furnace or to other electrically heated furnaces. The temperature levels cover a comparatively wide temperature range, as, in case of tubes, the corresponding tubes always have a not inconsiderable temperature gradient ("cold" inlet and "hot" outlet, especially with increasing coking).

While furnace according to the invention is concerned with radiant heat from electric heating elements, this does not exclude the possibility that other types of heating may also be used, for example direct heating, in which the tubes themselves are used as electrical resistors to generate heat, inductive heating or, in further furnaces, heating using burners. In any case, in addition to the radiant heat, some of the heat provided by a corresponding heating element can also be transferred to the tubes by convection.

Therefore, the use of indirect electrical heating, i.e. the use of radiant heat provided by means of electrical heating elements, does not exclude the presence of additional electrical or non-electrical heating. In particular, it can further be possible to vary the contributions of the types of electrical and, in particular, non-electrical heating over time, for example depending on the supply and price of electricity or the supply and price of non-electrical energy carriers.

The furnace can further be partially or fully thermally insulated, i.e. the plurality of walls may in particular be lined with a material that is thermally resistant at the stated temperatures. In particular, at least 90%, 95% or 99% of surface are of the walls can be provided with thermally insulating material. The present invention is further not limited to the use of exactly one furnace but can in particular also be used in arrangements with different furnaces.

In an embodiment, the one or more electric heating elements are arranged on an inner surface of one or more walls of the furnace. In particular, when the electric heating element comprises elongated suspension elements on which the electric resistance heating band rests, a longitudinal axis of each of the one or more suspension elements is oriented in parallel to a normal vector to the inner surface of the wall on which the one or more electric heating element are arranged or wherein a longitudinal axis of each of the one or more suspension elements is oriented in parallel to the inner surface of the wall on which the one or more electric heating element are arranged. In a case in which the longitudinal axes of the suspension elements are oriented in parallel to the normal vector, the plurality of sections between the reverse bands of the electric resistance heating bands are rotated such that a side of the electric resistance heating bands corresponding to the width direction thereof at least partially faces the one or more tubes. In this case, the electric resistance heating band can have three sections, the section resting on the suspension element, the section facing towards the one or more tubes and an intermediate section in which the rotation takes place. When using suspension elements with longitudinal axis being oriented parallel to the inner surface of the reaction vessel the electric resistance heating bands can be arranged on the suspension elements such that the side corresponding to the width-direction of the electric resistance heating bands faces the tubes without any rotation of the electric resistance heating band in the plurality of sections.

While a longitudinal axis parallel to the normal to the wall of the furnace allows for upgrading of older systems and use of a known entity, the arrangement with longitudinal axis of the suspension elements parallel to the inner surface of the wall of the furnace on which the electric heating elements are arranged yields a higher surface area facing the tubes and thus providing a greater portion of the radiant heat being radiated towards the tubes.

In another embodiment, the heating band is supported simply on metallic hooks anchored within the refractory wall (for electric insulation) comprising the same advantages.

In an embodiment, the inner surface of the wall of the furnace on which the one or more electric heating elements are arranged, comprises one or more spacers that are arranged and configured to prevent the electric resistance heating band coming into contact with the inner surface of the wall. In particular, the spacers are made of a material that is electrically insulating and heat resistant up to the temperature that should be achieved within the furnace.

Thereby, close contact of the heating band with the wall is avoided and free radiation from the heating element ensured thereby avoiding temperature peaks.

The invention further relates to a method for performing a chemical process and/or for heating a process medium in a furnace. The furnace comprises a plurality of walls defining an interior volume of the furnace, one or more heat sinks arranged in the inner volume of the furnace and one or more electric heating elements arranged in the interior volume of the furnace and configured to provide radiant heat to heat the one or more heat sinks, wherein each electric heating element comprises an electric resistance heating band having a width and a thickness, wherein the width is greater than the thickness, wherein the electric resistance heating band comprises a plurality of reverse bends arranged along a first direction and a plurality of sections arranged between adjacent reverse bends and the one or more electric heating elements are arranged such that the plurality of sections at least partially faces towards the one or more heat sinks. In particular, a furnace according to any of the aforementioned embodiments is used in the method.

The same advantages as for the furnace and the electric heating element apply accordingly to the method.

### Short description of the Figures

Embodiments of the invention are described below purely by way of example with reference to the accompanying drawing, wherein
Figure 1 shows a side view of a furnace according to an embodiment of the present invention,
Figure 2 shows a side view of a furnace according to another embodiment of the present invention,
Figure 3 shows front view of a section of an electric heating element according to an embodiment of the present invention,
Figure 4 shows a top view of a furnace according to an embodiment of the present invention,
Figure 5 shows front view of a section of an electric heating element according to another embodiment of the present invention, and
Figure 6 shows a top view of a furnace according to an embodiment of the present invention.

### Embodiments of the invention

The embodiments described below are described solely for the purpose of assisting the reader in understanding the claimed and previously explained features. They are merely representative examples and are not intended to be exhaustive and/or limiting with respect to the features of the invention. It is to be understood that the advantages, embodiments, examples, functions, features, structures and/or other aspects described above and below are not to be considered limitations of the scope of the invention as defined in the claims or limitations of equivalents to the claims, and that other embodiments may be used and modifications may be made without departing from the scope of the claimed invention.

Different embodiments of the invention may include, comprise, consist of, or consist essentially of other useful combinations of the described elements, components, features, parts, steps, means, etc., even if such combinations are not specifically described herein. In addition, the disclosure may include other inventions that are not currently claimed but that may be claimed in the future, particularly if they are encompassed by the scope of the independent claims.

Explanations relating to devices, apparatuses, arrangements, systems, etc., according to embodiments of the present invention may also apply to methods, processes, methods, etc., according to embodiments of the present invention, and vice versa. Elements, process steps, etc. which are identical, have the same effect, correspond to each other in their function, are structurally identical or comparable, etc. may be indicated by identical reference signs.

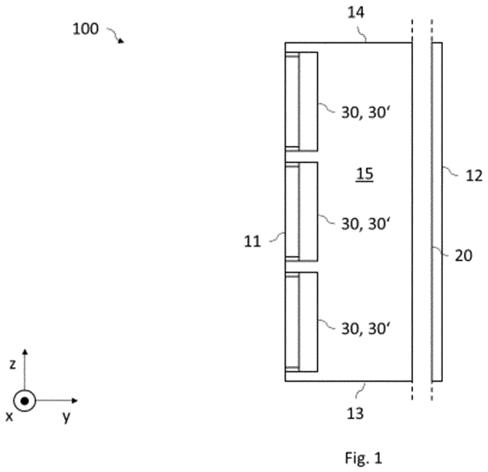

Figure 1 shows a side view of a furnace 100 according to an embodiment of the present invention, in particular a cut through the furnace 100 along the yz-plane. The furnace 100 a plurality of walls 11, 12, 13, 14 in which three electric heating elements 30, 30' are arranged on an inner surface of a front-end wall 11 of the furnace 100 next to each other in the z-direction. Opposite to the wall 11 of the furnace 100 one or more heat sinks 20 (only one heat sink 20 can be seen) is at least partially arranged in the interior volume 15 of the furnace 100. The one or more heat sinks 20 are for example tubes arranged in a row in the x-direction (only one tube can be seen). While here only one row of tubes is arranged in the furnace 100, it is also possible to arrange more than one row of tubes in the furnace 100 next to each other in the y-direction. The tubes enter the furnace through a bottom wall 13 and exits the furnace 100 through the top wall 14. The tubes can for example be provided with a reverse point outside the furnace 100 and enter the furnace 100 again from the top wall 14 and exit the furnace via the bottom wall 13. While in the provided figures show tubes as heat sinks 20, it is pointed out that other heat sinks 20 can also be provided in the furnace 100.

During operation of the furnace 100, a reactant of the chemical reaction or process medium to be heated is guided through the tubes. In order to perform the chemical reaction, the temperature level in the heat sink 20 has to reach a temperature between 400 °C and 1,500 °C, in particular between 450 °C and 1,300 °C, furthermore in particular between 500 °C and 1,200 °C. To achieve the necessary temperature level, a current is passed through the electric heating elements 30, 30', in particular the electric resistance heating band 31, 31' of the electric heating elements 30, 30' to generate heat in the electric resistance heating band 31, 31' which is radiated towards the heat sink 20 or the tubes, respectively, arranged in the interior volume of the furnace 100 and heats the reactant or process medium inside the tubes.

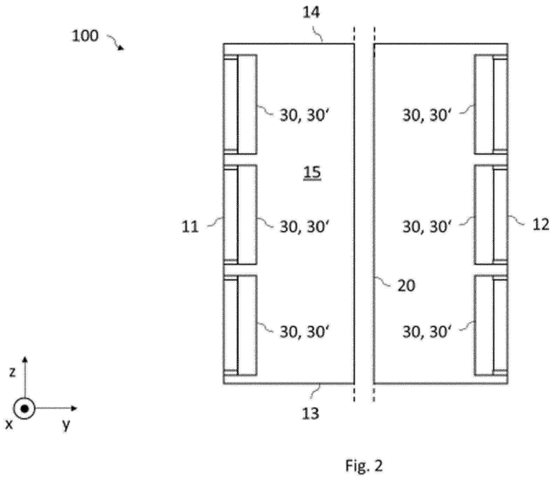

Figure 2 shows a side view of a furnace 100 according to another embodiment of the present invention, in particular a cut through the furnace 100 along the yz-plane.

In contrast to the embodiment shown in Fig. 1, electric heating elements 30, 30' are not only provided on the front-end wall 11 of the furnace, but also on the back-end wall 12. Thereby, the amount of heat generated and radiated towards the heat sink 20 can be increased. Further, it would also be possible to arrange additional electric heating elements 30, 30' on the side walls of the furnace 100 (not shown).

While in both embodiments of Fig. 1 and Fig. 2 exactly three electric heating elements 30, 30' are shown arranged on a single wall, the number of electric heating elements 30, 30' is not restricted to only three electric heating elements 30, 30' per wall 11, 12 of the furnace 100. Rather, the number of electric heating elements 30, 30' arranged on each wall 11, 12 depends on the size of the furnace 100 and the size of electric heating elements 30 and can be more or less than three, depending on the amount of heat that is necessary.

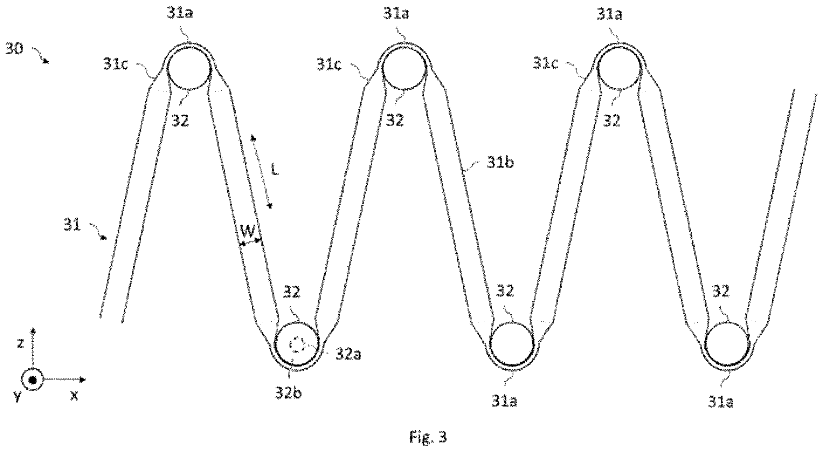

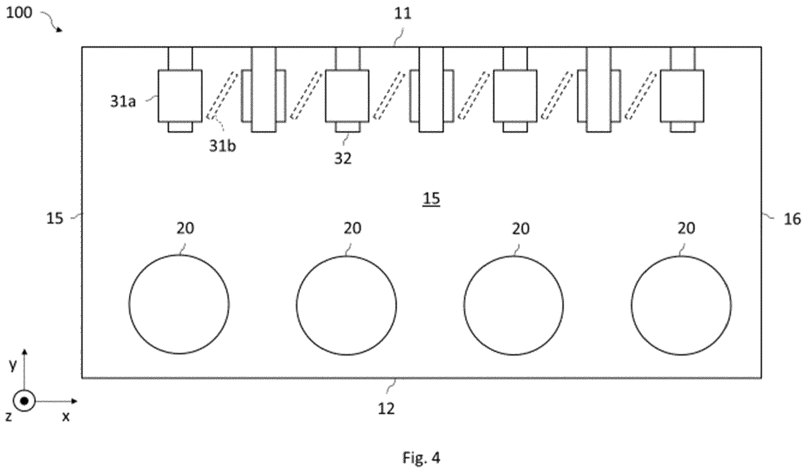

Figure 3 shows front view of a section of an electric heating element 30 according to an embodiment of the present invention and Figure 4 shows the electric heating element 30 of the embodiment of Fig. 3 arranged in the furnace 100. In the following, both Figures are described together.

The furnace 100 comprises four heat sinks 20, for example a row of four tubes, and the electric heating elements 30 arranged only on one wall 11 of the furnace 100. Other arrangements with more than one row of tubes, other heat sinks 20 or electric heating elements 30 arranged on other walls of the furnace 100 are also possible.

The electric heating element 30 comprises several suspension elements 32 on which the reverse bends 31 a are formed and on a surface of which the electric resistance heating band 31 rests. As shown in Fig. 3, the suspension elements 32 and therefore the reverse bends 31 a are arranged in two rows along a first direction, i.e. the x-direction. The two rows are distanced from one another in a second direction (z-direction). Further, the suspension elements 32 of the individual rows are arranged in a staggered fashion such that the electric resistance heating band 31 is arranged on these suspension elements 32 in a zig-zag-arrangement.

Between adjacent suspension elements 32, a plurality of sections 31b of the electric resistance heating band 31 are arranged in such a way that an angle between the first direction, i.e. the x-direction, and the width direction W is less than 90°. Thereby a side of the plurality of sections 31b of the electric resistance heating band 31, in particular a side of each of the plurality of sections 31b, one of the sides corresponding to the width direction W of the electric resistance heating band 31 faces, at least partially, in a direction towards away from the electric heating element 30 and towards the heat sink 20, i.e. the tubes. Between the reverse bends 31a of the electric resistance heating band 31 and the section 31b, twisting sections 31c are arranged, in which the electric resistance heating band 31 is rotated out of the direction of the reverse bends 31a (and the section 31b) to face the heat sinks 20. Thereby, a larger amount of the radiant heat, which is mainly radiated in a direction parallel to a normal vector on the surface of the electric resistance heating band 31, is radiated towards the heat sinks 20 compared to a conventional arrangement, in which the electric resistance heating band 31 does not comprise a plurality of sections 31b that are rotated in such a way between the reverse bends 31a. The rotation of the plurality of sections 31b around the length direction L of the electric resistance heating band compared to the part that rests on the suspension elements 32 can, for example, be greater than or equal to 15° or 30° and up to 90° such that an angle of less than or equal to 65°, 60°, 45°, 30° or 0° is achieved.

Further, the suspension elements 32 each comprise a metallic core 32a (shown with a dashed line) surrounded by a thermally and electrically insulating material 32b that insulates the metallic core electrically and thermally from the electric resistance heating bands 31. Here it should be mentioned, that the metallic core 32a is fully surrounded by the insulating material 32b and is only shown in the Fig. 3 for visualization purposes.

In Figure 4, the electric heating element 30 shown in Fig. 3 is arranged in the furnace 100. The suspension elements 30 are arranged such that a longitudinal axis of the elongated suspension elements 30 is parallel to a normal on the inner surface of the front-end wall 11 of the furnace 100, i.e. extend in and is parallel to the z-direction. The reverse bends 31a rest on the suspension elements 32 such that the width direction W of the electric resistance heating band 31 extends in parallel to the longitudinal axis of the suspension elements 32 in the region where the electric resistance heating band 31 rests on the suspension elements 32. Further, the plurality of sections 31b (shown with a dashed outline) between adjacent ones of the suspension elements 32 are rotated around the length direction L of the electric resistance heating bands 31 by an angle compared to the reverse bends 31a such that at least part of a surface corresponding to the width direction W of the electric resistance heating bands 31 faces towards the heat sinks 20 at least partially arranged in the furnace 100, i.e. towards the tubes.

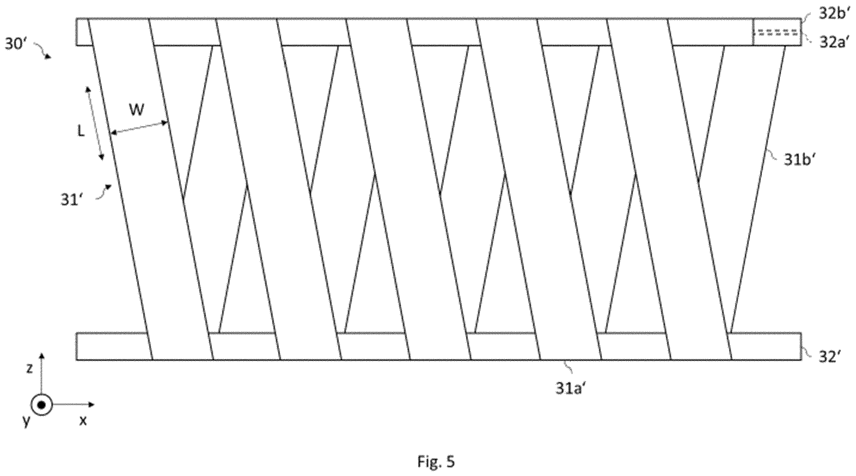

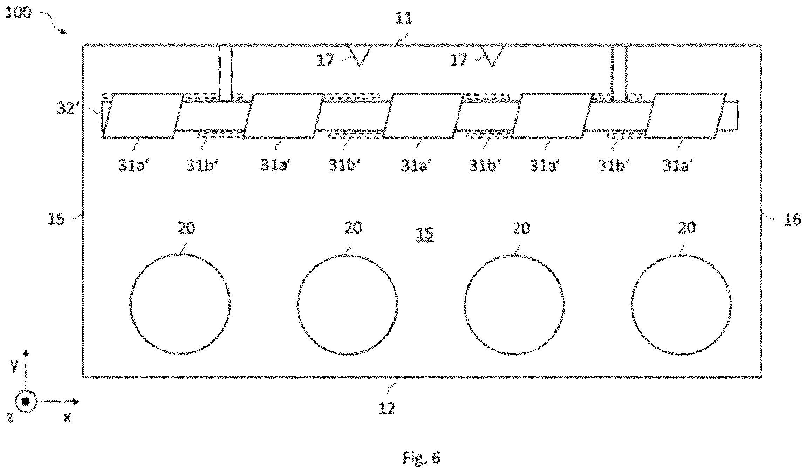

Figure 5 shows front view of a section of an electric heating element 30' according to an embodiment of the present invention and Figure 6 shows a top view of the electric heating element 30' arranged in the furnace 100, i.e. a cut along the xy-plane. In the following, both Figures are described together.

The furnace 100 again comprises only a single row of tubes 20 and electric heating elements 30' arranged only on the inner surface of the front-end wall 11 of the furnace 100. However, arrangements with more than one row of tubes 20 and electric heating elements 30' arranged on the opposite back-end wall 12 of the furnace 100 are also possible.

The electric heating element 30' shown in Figs. 5 and 6 comprises two elongated suspension elements 32' arranged in parallel to the inner surface of the front-end wall 11 of the furnace 100 on which the electric heating element 30' is arranged. As shown in Fig. 4, the suspension elements 32' each comprise an inner metal core 32a' (shown with a dashed outline) surrounded by a thermally and electrically insulating material 32b', which, for example, can be a ceramic material, and electrically and thermally insulates the metal core 32a' from the electric resistance heating band 31'. Here, the metal core 32a' is only shown for illustration purposes and is usually fully surrounded by the insulating material 32b'.

The reverse bends 31a' are arranged along the x-direction as the first direction a plurality of sections 31b' are arranged between reverse bends 31a' formed on different suspension elements 32'. By this configuration of the suspension elements 32', the plurality of sections 31b' have a width direction W parallel to the yz-plane. The angle between the width direction and the first direction (x-direction) is thus 0°, i.e. the sides corresponding to the width direction W of sections adjacent to one another in the x direction fully face away from one another and away from the electric heating element 30', i.e. face in the y-direction.

In Fig. 6, only the top reverse bends 31a are shown, but it should be clear that reverse bends 31a are also present on the second suspension element 32' arranged distanced from the first suspension element 32' in the z-direction, as can be seen in Fig. 5. Due to the longitudinal axis of the suspension elements 32' being arranged in parallel to the inner surface of the front-end wall 11 of the furnace 100, the plurality of sections 31b' (shown with a dashed outline in Fig. 6) of the electric resistance heating band 31' fully face the heat sinks 20, i.e. the tubes, with the side corresponding to the width direction W of the electric resistance heating band 31', without the plurality of sections 31b' having to be rotated around the length direction L with regard to the reverse bends 31a'. Thereby, the maximum amount of radiant heat is radiated towards the tubes 20 arranged in the interior volume 15 of the furnace 100.

The furnace 100 further comprises a plurality of spacers 17 that are arranged on the inner surface of the wall 11 of the furnace 100 on which the electric heating elements 30' are arranged and are configured to prevent the inner surface of the front-end wall 11 of the furnace 100 to come into contact with the electric resistance heating band 31'. In particular, the spacers 17 are made out of an electrically insulating material that can resists high temperatures.

## Claims

1. Electric heating element (30, 30'), in particular for arrangement in a furnace, configured to provide radiant heat, in particular to a heat sink (20), the electric heating element (30, 30') comprising:
an electric resistance heating band (31, 31') having a width and a thickness, wherein the width is greater than the thickness,
wherein the electric resistance heating band (31, 31') comprises a plurality of reverse bends (31a, 31a') arranged along a first direction and a plurality of sections (31b, 31b') arranged between adjacent reverse bends (31a, 31a'), **characterized in that**
an angle between a width direction of the plurality of sections (31b, 31b') and the first direction is less than 90°.

2. Electric heating element (30, 30') according to claim 1, wherein the angle is equal to or less than 75° or equal to or less than 60° or equal to or less than 45° or equal to or less than 30° or equal to 0°.

3. Electric heating element (30, 30') according to claim 1 or 2, wherein the electric resistance heating band (31, 31') has a rectangular or elliptical cross-section.

4. Electric heating element (30, 30') according to any of claims 1 to 3, wherein the plurality of sections (31b, 31b') constitutes at least 50% or at least 60% or at least 75% or at least 85% or at least 95% of the electric resistance heating band (31, 31').

5. Electric heating element (30, 30') according to any of claims 1 to 4, wherein the electric resistance heating band (31, 31') is guided at the reverse bends (31a, 31a') using one or more elongated suspension elements (32, 32') on a surface of which the electric resistance heating band (31, 31') rests.

6. Electric heating element (30, 30') according to claim 5, wherein the one or more suspension elements (32, 32') comprises a metallic core (32a, 32a') surrounded by a thermally and electrically insulating material (32b, 32b').

7. Furnace (100) for performing a chemical process and/or heating a process medium, wherein the furnace (100) comprises:
a plurality of walls (11, 12, 13, 14) defining an interior volume (15) of the furnace (100),
one or more heat sinks (20) arranged at least partially in the inner volume (15) of the furnace (100),
one or more electric heating elements (30, 30') arranged in the interior volume (15) of the furnace (100) and configured to provide radiant heat to heat the one or more heat sinks (20),
wherein each electric heating element (30, 30') comprises an electric resistance heating band (31, 31') having a width and a thickness, wherein the width is greater than the thickness,
wherein the electric resistance heating band (31, 31') comprises a plurality of reverse bends (31a, 31a') arranged along a first direction and a plurality of sections (31b, 31b') arranged between adjacent reverse bends (31a, 31a'),
wherein the one or more electric heating elements (30, 30') are arranged such that the plurality of sections (31b, 31b') at least partially faces towards the one or more heat sinks (20) arranged in the interior volume (15).

8. Furnace (100) according to claim 7, wherein at least one, in particular all, of the one or more electric heating elements (30, 30') are an electric heating element according to any of claims 1 to 6.

9. Furnace (100) according to claim 8 or 9, wherein the one or more heat sinks (20) are heated to a temperature level between 0 °C and 1,200 °C or between 300 °C and 1,050 °C or between 400 °C and 950 °C.

10. Furnace (100) according to any of claims 7 to 9, wherein the one or more heat sinks (20) are one or more tubes that are at least partially arranged in the interior volume (15) of the furnace (100).

11. Furnace (100) according to claim 7 to 10, wherein the one or more electric heating elements (30, 30') are arranged on an inner surface of one or more of the plurality of walls (11, 12, 13, 14).

12. Furnace according to claim 11 in reference to claim 5 or 6, wherein a longitudinal axis of each of the one or more suspension elements (32) is oriented in parallel to a normal vector to the inner surface of the wall (11, 12) on which the one or more electric heating element (30) are arranged or wherein a longitudinal axis of each of the one or more suspension elements (32') is oriented in parallel to the inner surface of the wall (11, 12, 13, 14) on which the one or more electric heating element (30') are arranged.

13. Furnace (100) according to any of claims 7 to 12, wherein on the inner surface of the wall (11, 12, 13, 14) on which the one or more electric heating elements (30, 30') are arranged one or more spacers (17) are arranged and configured to prevent that the electric resistance heating band (31, 31') comes into contact with the inner surface of the wall (11, 12, 13, 14) on which the one or more electric heating elements (30, 30') are arranged.

14. Method for performing a chemical process and/or for heating a process medium in a furnace (100), the furnace (100) comprising
a plurality of walls (11, 12, 13, 14) defining an interior volume (15) of the furnace (100),
one or more heat sinks (20) arranged in the inner volume (15) of the furnace (100),
one or more electric heating elements (30, 30') arranged in the interior volume (15) of the furnace and configured to provide radiant heat to heat the one or more heat sinks (20),
wherein each electric heating element (30, 30') comprises an electric resistance heating band (31, 31') having a width and a thickness, wherein the width is greater than the thickness,
wherein the electric resistance heating band (31, 31') comprises a plurality of reverse bends (31a, 31a') arranged along a first direction and a plurality of sections (31b, 31b') arranged between adjacent reverse bends (31a, 31a'),
wherein the one or more electric heating elements (30, 30') are arranged such that the plurality of sections (31b, 31b') at least partially faces towards the heat sink (20).

15. Method according to claim 14, wherein the furnace (100) is a furnace (100) according to any of claims 7 to 13.
